(19) Europäisches Patentamt
European Patent Office
Office européen des brevets

(11) Publication number: **0 136 857**
**B1**

(12) **EUROPEAN PATENT SPECIFICATION**

(45) Date of publication of patent specification: **17.11.88**

(51) Int. Cl.$^4$: **G 01 H 3/12,** G 01 S 15/02

(21) Application number: **84306257.1**

(22) Date of filing: **13.09.84**

(54) **Apparatus for observing sound field of ultrasonic wave.**

(30) Priority: **13.09.83 JP 168600/83**

(43) Date of publication of application:
**10.04.85 Bulletin 85/15**

(45) Publication of the grant of the patent:
**17.11.88 Bulletin 88/46**

(84) Designated Contracting States:
**DE FR GB NL SE**

(56) References cited:
**EP-A-0 128 635**
**US-A-4 059 010**

**PROCEEDINGS OF THE 1ST INTERNATIONAL SYMPOSIUM ON MEDICAL IMAGING AND IMAGE INTERPRETATION ISMIII'82, 26th-28th October 1982, Berlin, DE, pages 454-459, IEEE, New York, US; T. SATO et al.: "Nonlinear parameter tomography, active incoherent imaging and adaptive imaging for ultrasonic tissue characterization"**

**PHYSICS IN MEDICINE AND BIOLOGY, vol. 22, no. 2, 1977, pages 327-340, London, GB; T.D. SACHS et al.: "A two-beam acoustic system for tissue analysis"**

(73) Proprietor: **FUJITSU LIMITED**
**1015, Kamikodanaka Nakahara-ku**
**Kawasaki-shi Kanagawa 211 (JP)**

(72) Inventor: **Sato, Takuso**
**Gajyoen-manshon 4-1205 4-5-26, Kamiosaki**
**Shinagawa-ku Tokyo 141 (JP)**
Inventor: **Ichida, Nobuyuki**
**Horie-Manshon 403 5041, Naruse**
**Machida-shi Tokyo 194 (JP)**

(74) Representative: **Sunderland, James Harry et al**
**HASELTINE LAKE & CO Hazlitt House 28**
**Southampton Buildings Chancery Lane**
**London WC2A 1AT (GB)**

(56) References cited:
**JOURNAL OF THE ACOUSTICAL SOCIETY OF AMERICA, vol. 74, no. 5, November 1983, pages 1518-1521, Acoustical Society of America, New York, US; Z. ZHEMING et al.: "Determination of the acoustic nonlinearity parameter B/A from phase measurements"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 136 857 B1**

## Description

The present invention relates to an ultrasonic wave apparatus which converts the sound field of an ultrasonic wave, radiated by an ultrasonic vibrator into biological tissue or other medium, into a video image.

The conventional methods for measuring the sound field of an ultrasonic wave in an ultrasonic wave medium are the optical schlieren method and the direct hydrophone measurement method.

These methods, however, are not suitable for measuring the sound field in biological tissue or other media through which light cannot pass or a hydrophone cannot be moved freely.

An article by Takuso Sato et al in Proceedings of the 1st International Symposium on Medical Imaging and Image Interpretation, 26—28 October 1982, Berlin, pages 454—459 discloses a nonlinear parameter tomography method involving an equivalent nonlinear parameter $(B/A)_e$. As explained in that article, the nonlinear parameter B/A is the degree of the dependency of sound velocity on the pressure and is defined by

$$B/A=(1/2\rho_o C_o)(\delta C/\delta P)s \qquad (a)$$

where, C is sound velocity, P is sound pressure, $C_o$ and $\rho_o$ are sound velocity and density under static pressure and s is entropy. The main cause of the nonlinearity is the deviation of behaviour of the medium for the change of the pressure. In tissue, for instance, the change may be related with the adaptability to the change of state of pressure.

The new parameter (B/A) equivalent is introduced by:

$$(B/A)_e=(1/2\rho_o C_o)(\delta C/\delta \dot{P}i)s \qquad (b)$$

where Pi is pressure from the direction perpendicular to the sound propagation. Using the Poisson ratio v, B/A and $(B/A)_e$ are related by

$$(B/A)_e=(v/(1-v))(B/A) \qquad (c)$$

In most biological objects v is close to 0.5, hence $(B/A)_e$ and B/A take about the same value.

The proposed method uses a relatively low power, high frequency probing wave and a relatively high power, planar pumping wave perpendicular to the probing wave. The probing wave is subjected to a phase shift by the pumping wave and this phase shift gives a Fourier spectrum of the distribution of the nonlinear parameter, so that the image of $(B/A)_e$ along the probing wave can be reconstructed.

EP—A—0 128 635 by the present applicant is relevant prior art under Article 54(3) only. It discloses a method of measuring the equivalent nonlinear parameter $(B/A)_e$ using intersecting probing and pumping waves as in the abovementioned document, but in which a pulsed pumping wave is applied rather than a continuous pumping wave. A single elongated transducer for the pumping wave produces a wide beam of sound covering the measured region and supplies pumping sound pressure to the medium uniformly and simultaneously.

According to the present invention, there is provided an apparatus for investigating a medium by ultrasonic waves, comprising:

sending transducer means for sending an ultrasonic measurement wave into the medium,

receiving transducer means, for receiving the measurement wave from the medium; and

pumping transducer means, for transmitting an ultrasonic pumping wave into the medium in a direction crossing the measurement wave; characterised in that

said pumping transducer means comprises a plurality of transducer elements each having a respective variable delay element and is thereby operable to transmit a non-planar pumping wave or a substantially planar pumping wave into the medium.

An embodiment of the present invention can enable rapid, easy measurement of an ultrasonic wave sound field in an ultrasonic wave medium.

An embodiment of the present invention can also enable measurement of an ultrasonic wave sound field in biological tissue or other media, for which an ultrasonic wave sound field was previously unmeasurable by conventional methods.

An embodiment of the present invention can enable a pumping wave to be focussed at an arbitrary point in an ultrasonic wave medium e.g. biological tissue, for use e.g. in hyperthermia.

Reference is made, by way of example, to the accompanying drawings, in which:

Figure 1 is a block diagram of a principle by which a sound field of an ultrasonic wave is converted into an image;

Figure 2 is a block diagram of an embodiment of the present invention;

Figure 3A is a detailed block diagram of a phase detector shown in Figure 2;

Figure 3B is a time chart explaining the operation of the phase detector shown in Figure 2;

Figure 4A is a detailed block diagram of a signal averager shown in Figure 2;

Figure 4B is a time chart explaining the operation of the signal averager shown in Figure 2;

Figure 5 is a detailed block diagram of a filter shown in Figure 2; and

Figure 6 is a diagram of an application of the present invention.

In view of the problems in the prior art, in the present invention the sound field of ultrasonic waves in biological tissue or other such medium is converted into a video image by using the non-linearity of the ultrasonic wave medium.

The present invention enables control of the sound field to any desired spatial distribution through confirmation of the video-image sound field. The present invention provides ultrasonic wave apparatus which uses a non-linearity characteristic of the ultrasonic wave medium.

First, a principle for determining a quantity

$$\frac{1}{\rho C}(B/A)e$$

for the equivalent non-linear type parameter (B/A)e will be explained. The symbol e suffix after parentheses means "equivalent".

As shown in Figure 1, a measurement sending transducer 7 ($XT_1$ to $XT_N$) and a measurement receiving transducer 9 ($XR_1$ to $XR_N$) face each other across a medium to be measured. Sending and receiving of a continuous wave for measurement are carried out between the ith elements $XT_i$ and $XR_i$. Further, in Figure 1, 1 denotes a timing portion, 2 a continuous wave oscillator, and 3 a driving amplifier.

A pumping transducer 5 ($XP_1$ to $XP_M$) sends out a plane pulse wave 16, for example, at a right angle to the measurement continuous-wave beam. A delay circuit 4 is provided in the sending circuit and is maintained with a constant delay for triggering of the pulse.

It is assumed that the sound pressure of the measurement beam or probing beam is sufficiently low and that the only pressure variation in the medium is caused by the sound pressure of the plane pulse wave from the pumping transducer 5. If the density of the ultrasonic wave medium is ρ, the sound velocity is C, and the equivalent non-linear type parameter is $(B/A)_e$, the sound field velocity C of the measurement beam fluctuates as shown in the following equation (1) due to sound pressure $P_o$ of the plane pulse wave.

$$\Delta C=\frac{1}{2\rho C}(B/A)_e\cdot\Delta P_o \qquad (1)$$

Therefore, while the plane pulse wave crosses the measurement wave, the phase of the measurement wave at $z=z_o$ varies as follows:

$$\phi(z_o)\doteqdot a\int_{-\infty}^{+\infty}\frac{1}{\rho(z)C(z)}(B/A)e(z)\Delta P\left(\frac{z-z_o}{\bar{C}}\right)dz \qquad (2)$$

where $\bar{C}$ denotes a mean value of the sound velocity in the medium and a is a proportional constant. Now, considering the following function g(z)

$$g(z_o-z)=\Delta P\left(\frac{z-z_o}{C}\right) \qquad (3)$$

$$\phi(z_o)\doteqdot a\left[\frac{1}{\rho(z)C(z)}(B/A)e(z)\right]*g(z) \qquad (4)$$

wherein * denotes a "convolution". If G(w)=F{g(z)} (where F means Fourier Transformation), the distribution on the z axis of

$$\frac{1}{\rho C}(B/A)$$

can be calculated by passing the above-mentioned phase variation through a filter 14 having a frequency characteristic of

$$\frac{1}{a}\quad\frac{1}{G(w)}$$

That is, the distribution of

$$\frac{1}{\rho C}(B/A)e$$

on (along) the measurement or probing continuous-wave beam can be measured by supplying the output of the measurement transmitting transducer $XT_1$ to a phase detector 12 and passing it through the above-mentioned filter 14 after the phase of the output of the transmitting transducer $XT_1$ is detected.

Therefore, repeating the above-mentioned operations by switching the (selected) pair of the measurement transducers from $XT_1$, $XR_1$ to $XT_N$, $XR_N$ enables the two-dimensional distribution of

$$\frac{1}{\rho C}(B/A)e$$

to be obtained. The information concerning this two-dimensional distribution is stored, for example, in a frame memory 17.

The three-dimensional distribution can be obtained by obtaining many two-dimensional distributions with respect to different y.

Figure 2 shows the construction of an embodiment of the present invention. In Figure 2, a sending delay circuit 4a is constituted so that a delay amount is suitably supplied to the output of the drive amplifier 3.

The phase detector circuit 12 is constituted as shown in Figure 3A. In Figure 3A, comparators 31 and 32 are used for comparing the input of the received signal and the reference signal with a threshold value. The comparators 31 and 32 shown in Figure 3A extract only phase information (position information of zero-cross points) from the sinusoidal analog waveform (of the received signal). In Figure 3B, ① and ② show the received signal and the reference signal, respectively, and ③ and ④ show the waveforms of the outputs of the comparators 31 and 32, respectively. An exclusive OR circuit 33 outputs the exclusive OR of the waveforms ③ and ④. The output of the exclusive OR circuit 33 is shown in ⑤ of Figure 3B. In Figure 3A, a high pass filter 34 removes the slow fluctuations of the phase (such as drift components, for example, variation of the body temperature or atmospheric pressure) and a low pass filter 36 is used for obtaining the amplitude-modulated waveform ⑦ from the pulse-modulated waveform ⑤. The waveform ⑥ shows the original phase variation.

A signal averager 13 is constituted as shown in

Figure 4A. A suitable type of signal averager 13 is commercially available. In Figure 4A, an input signal is converted into a digital signal by an analog-to-digital (A/D) converter 41 and written via an adder 42 into a memory 43. The A/D conversion is carried out synchronized with an A/D clock. Writing and reading of the memory and step up (incrementing) of an address are carried out using the same A/D clock. At each pulse of the A/D clock, A/D conversion, read-out of the address, addition of the read-out value and A/D converted value, writing of the result of the addition into the same address, and "+1" incrementing of the address are carried out. Every time the transmit sync. signal arrives, the above-mentioned operation is commenced from the same address (such as, for example, 000 ... 0 address). This operation continues until the synchronized accumulation commence signal is in the "stop" state.

In Figure 4A, a controller 44 receives the synchronized accumulation signal, the transmit sync. signal, and A/D clock signal, and increments the address, forms the read/write (R/W) control signal, and performs a memory clear operation at the time when the synchronized accumulation is commenced. Figure 4B shows the relationships between synchronized accumulation signal (a), memory clear (b), the transmit sync. (c), and (d), A/D clock (e), the address in the memory (f), and the R/W control (g).

After synchronized accumulation is completed (or possibly during the synchronized accumulation), the average (accumulated) analog waveform is obtained by converting the digital value read out in order from the memory into an analog value. The synchronized accumulation start and stop and the transmit sync. signal are supplied from the timing control portion shown in Figure 2.

A filter 14 may be constituted for example as shown in Figure 5, which shows an analog delay circuit TAP-32 of Reticon Co., Ltd. In Figure 5, a Schottky transistor-transistor logic flip-flop (51) converts an input clock into desired complementary square wave clock signals at Q and $\bar{Q}$. Rise and fall times are adequately short and skew is minimal. An 0026 translator 53 (National or Motorola) converts amplitude and level to meet the requirements of analog delay circuit TAP-32 while preserving integrity of waveforms. The output bias and signal summing arrangements are chosen in the circuit shown in Figure 5 as the best compromise between conflicting requirements. For equal tap weights, the potentiometers are offset by equal amounts (i.e., resistor values to the + line are all equal, as are the complementary values to the − line; a centered potentiometer gives zero tap weight); for other filter arrangements, the ratio of the resistances determines the tap weight. As shown in Figure 5, the input to the pin 21 is transmitted from the TAP 1 to TAP 32, and the output of the suitable TAP's are combined by a suitable ratio, so that any filter characteristic can be obtained. In Figure 5, a suitable characteristic of the filter can be obtained by adjusting vari-ohms 54a, 54b ... 54n.

In the circuit shown in Figure 2, the delay amount from the pumping transducer 5 to the sending delay circuit 4a may be suitably provided so as to produce a pulse wave 16' with a sound field focused at a certain point. In this case, unlike in the case of the plane wave, the pressure $\Delta P$ of the ultrasonic wave pulse differs in value in accordance with the position. The one-dimensional variation on the measurement beam is given by following equation for the pressure $\Delta P_o$ by the plane pulse:

$$\Delta P(z)=\Delta P_o \cdot k(z)$$

wherein k(z) is a real function of z due to the sound field. Therefore, the phase difference at each point z of the measurement continuous wave is given from equation (4) as shown below.

$$\phi(z) \fallingdotseq ak(z)\frac{1}{\rho(z)C(z)}(B/A)e(z)*g(z) \qquad (5)$$

If this is passed through the above-mentioned filter, the output is as follows:

$$\left[\frac{1}{\rho(z)C(z)}(B/A)e(z)\right]k(z)$$

When this value is divided by the value previously obtained (using a plane wave pumping beam), that is,

$$\frac{1}{\rho(z)C(z)}(B/A)e(\dot{z})$$

the value k(z) on the measurement beam can be obtained. Therefore, k(x, z), that is, the two-dimensional distribution of the sound field, is obtained by switching the pair of the measurement transducers so as to obtain k(z) (at different values of x). The three-dimensional distribution k(x, y, z) can be obtained by obtaining many images of two-dimensional distribution (at different values of y). Further, if the value (distribution of) $\Delta P$ is required, it can be calculated by multiplying the distribution of k by the value of $\Delta P_o$.

As shown in Figure 6, "k" (16) is synthesized as explained above, and displayed together with

$$\frac{1}{\rho C}(B/A)e$$

as obtained above (20), using display means (18). The distribution of k shows the sound field in the ultrasonic wave medium of the pumping transducer 5. By synthesizing and displaying as shown in Figure 6, the sound field of the pumping

transducer 5 can be precisely focused to a target on the picture (display) of the

$$\frac{1}{\rho C}(B/A)e$$

distribution.

In this method, there is a problem of distortion between the actual distribution in the medium, and the picture of

$$\frac{1}{\rho C}(B/A)e.$$

The picture of the

$$\frac{1}{\rho C}(B/A)_e$$

distribution is distorted from the actual distribution of the medium due to fluctuation (variation) of the ultrasonic wave sound velocity. The picture of

$$\frac{1}{\rho C}(B/A)e$$

and the picture of k, however, are both distorted for the same reason. Therefore, if the focus of the sound field k is placed at a position of a target on the picture

$$\frac{1}{\rho C}(B/A)e$$

of the synthesized figure (medium), the same result as if the focus was adjusted to a desired portion of the actual medium can be obtained. Further, the same result can be obtained if the distribution of ΔP is used instead of the distribution of k. Further, if

$$\frac{1}{\rho C}(B/A)e\Delta P \text{ or } \frac{1}{\rho C}(B/A)ek$$

is used instead of k, the form of the beam can also be sufficiently represented.

The focus of the pumping transducer 5 may be adjusted to any arbitrary position by suitably changing the delay amount of the sending delay circuit 4 shown in Figure 2 or by mechanically moving the pumping transducer 5.

This apparatus is very effective in hyperthermia. First, a tumor to be cured is located on the picture of the

$$\frac{1}{\rho C}(B/A)e$$

distribution of the medium. The focus of the pumping transducer is adjusted to the tumor by using the above-mentioned method. Then, heating is carried out by raising the output of the pumping transducer to kill only the tumor.

The output of the pumping transducer may be raised by increasing only the amplitude, as shown in Figure 2, or by switching the pulse wave to a continuous wave.

The image of the distribution displayed at the same time with the image of the sound field (k) may be converted to a conventional B mode image or tissue characterization image for realization of a diagnosis apparatus covering a wide range of information and a medical treatment apparatus.

Further, the distribution of Figure 1 and the distribution of Figure 2 may be obtained (determined) by switching the two-dimensional plane distribution as an unit, however, it may also be obtained by switching one dimensional distribution (that is, the distribution on a straight line by the pairs of $XT_i$, $XR_i$) as a unit and determining the ratio of the same in order to obtain a two-dimensional distribution.

As mentioned above, according to the present invention, the sound field of an ultrasonic wave in an ultrasonic wave medium is converted into a video image and is easily controllable to any spatial distribution with comparatively simple means by observing the converted image.

**Claims**

1. An apparatus for investigating a medium by ultrasonic waves, comprising:

sending transducer means (7) for sending an ultrasonic measurement wave into the medium,

receiving transducer means (9), for receiving the measurement wave from the medium; and

pumping transducer means (4a, 5), for transmitting an ultrasonic pumping wave into the medium in a direction crossing the measurement wave; characterised in that

said pumping transducer means comprises a plurality of transducer elements (5) each having a respective variable delay element (4a) and is thereby operable to transmit a non-planar pumping wave or a substantially planar pumping wave into the medium.

2. An apparatus as claimed in claim 1, wherein the pumping transducer means (4a, 5) is operable to transmit a first pumping wave for determining a first characteristic value characteristic of the medium, and a second pumping wave for determining a second characteristic value characteristic of a sound field resulting from the second pumping wave.

3. An apparatus as claimed in claim 2, wherein said first pumping wave is a substantially planar wave, and said first characteristic value is an equivalent nonlinear parameter value (B/A)e characteristic of the medium.

4. An apparatus as claimed in claim 2 or 3, wherein said second pumping wave is a non-planar wave, and said second characteristic value is a value k characteristic of the sound field resulting from the second pumping wave.

5. An apparatus as claimed in claim 2, 3, or 4, wherein said pumping transducer means is operable to focus said second pumping wave at a selected arbitrary point in the medium, by varying the delay amounts of the variable delay elements (4a) and/or by moving the transducer elements (5).

6. An apparatus as claimed in any preceding claim, further comprising a phase detector (12) for detecting a phase variation of the measurement wave received by the receiving transducer means (9).

7. An apparatus as claimed in claim 6, further comprising a filter (14) for filtering the phase variation of the measurement wave detected by the phase detector (12).

8. An apparatus as claimed in claim 7, further comprising a signal averager (13) interposed between the phase detector (12) and the filter (14).

9. An apparatus as claimed in claim 3, or any one of claims 4 to 8 as appended to claim 3, operable to produce a first distribution of values, derived from the measurement wave detected when using the first pumping wave, of the form

$$1/\rho C \cdot (B/A)_e$$

where ρ represents the density of the medium, C represents the velocity of sound waves in the medium and $(B/A)_e$ is the equivalent nonlinear parameter.

10. An apparatus as claimed in claim 4, or any one of claims 5 to 9 as appended to claim 4, operable to produce a second distribution of values, derived from the measurement wave detected when using the second pumping wave, of the form

$$1/\rho C \cdot (B/A)_e \cdot \Delta P$$

where ρ represents the density of the medium, C represents the velocity of sound waves in the medium and $(B/A)_e$ is the equivalent nonlinear parameter, and where ΔP represents a pressure change caused by the pumping wave and is indicative of the value k characteristic of the sound field.

11. An apparatus as claimed in claim 10, further comprising first storage means, for storing the first or second distribution of values.

12. An apparatus as claimed in claim 11, further comprising dividing means for calculating ratios of values derived from the measurement wave and corresponding values read out from the first storage means, and a second storage means for storing the ratios calculated by the dividing means.

**Patentansprüche**

1. Vorrichtung zur Untersuchung eines Mediums durch Ultraschallwellen, mit:

einer Sendewandlereinrichtung (7), um Ultraschallwellen in das Medium zu senden,

einer Empfangswandlereinrichtung (9), um die Meßwelle von dem Medium zu empfangen; und

einer Pumpwandlereinrichtung (4a, 5), um eine Ultraschallpumpwelle in das Medium, in einer Richtung quer zu der Meßwelle, zu übertragen; dadurch gekennzeichnet, daß

die genannte Pumpwandlereinrichtung eine Vielzahl von Wandlerelementen (5) umfaßt, die jeweils ein entsprechendes variables Verzögerungselement (4a) haben und dadurch betreibbar sind, um eine nicht-planare Pumpwelle oder eine im wesentlichen planare Pumpwelle in das Medium zu übertragen.

2. Vorrichtung nach Anspruch 1, bei der die Pumpwandlereinrichtung (4a, 5) betreibbar ist, um eine erste Pumpwelle für die Bestimmung eines ersten Charakteristikwertes zu übertragen, der für das Medium charakteristisch ist, und eine zweite Pumpwelle zur Bestimmung eines zweiten Charakteristikwertes, der für das Schallfeld charakteristisch ist, welches aus der zweiten Pumpwelle resultiert.

3. Vorrichtung nach Anspruch 2, bei der die genannte erste Pumpwelle eine im wesentlichen planare Welle ist, und der genannte erste Charakteristikwert ein äquivalenter, nicht-linearer Parameterwert (B/A)e ist, der charakteristisch für das Medium ist.

4. Vorrichtung nach Anspruch 2 oder 3, bei der die genannte zweite Pumpwelle eine nicht-planare Welle ist, und der genannte zweite Charakteristikwert ein Wert k ist, der charakteristisch für das Schallfeld ist, welches von der zweiten Pumpwelle resultiert.

5. Vorrichtung nach Anspruch 2, 3 oder 4, bei der die genannte Pumpwandlereinrichtung betreibbar ist, um die genannte zweite Pumpwelle auf einen ausgewählten beliebigen Punkt in dem Medium zu fokussieren, durch Variieren der Verzögerungsbeträge der variablen Verzögerungselemente (4a) und/oder durch Bewegen der Wandlerelemente (5).

6. Vorrichtung nach einem der vorhergehenden Ansprüche, ferner mit einem Phasendetektor (12) zum Detektieren der Phasenvariation der Meßwelle, die von der Empfangswandlereinrichtung (9) empfangen wird.

7. Vorrichtung nach Anspruch 6, ferner mit einem Filter (14) zum Filtern der Phasenvariation der Meßwelle, die durch den Phasendetektor (12) detektiert wird.

8. Vorrichtung nach Anspruch 7, ferner mit einem Signalmittelwertbilder (13), der zwischen dem Phasendetektor (12) und dem Filter (14) angeordnet ist.

9. Vorrichtung nach Anspruch 3, oder einem der Ansprüche 4 bis 8 in Verbindung mit Anspruch 3, die betreibbar ist, um eine erste Verteilung von Werten zu erzeugen, die aus der Meßwelle abgeleitet werden, die detektiert wird, wenn die erste Pumpwelle verwendet wird, in der Form

$$1/\rho C \cdot (B/A)_e,$$

wobei $\rho$ die Dichte des Mediums darstellt, C die Geschwindigkeit der Schallwellen in dem Medium darstellt und $(B/A)_e$ der äquivalente nicht-lineare Parameter ist.

10. Vorrichtung nach Anspruch 4, oder einem der Ansprüche 5 bis 9 in Verbindung mit Anspruch 4, die betreibbar ist, um eine zweite Verteilung von Werten zu erzeugen, die von der Meßwelle abgeleitet werden, die detektiert wird, wenn die zweite Pumpwelle verwendet wird, in der Form

$$1/\rho C \cdot (B/A)_e \cdot \Delta P,$$

wobei $\rho$ die Dichte des Mediums darstellt, C die Geschwindigkeit der Schallwellen in dem Medium und $(B/A)_e$ den äquivalenten nicht-linearen Parameter darstellt, und wobei $\Delta P$ eine Druckänderung darstellt, die durch die Pumpwelle verursacht wird und eine Anzeige für den Wert k bildet, der charakteristisch für das Schallfeld ist.

11. Vorrichtung nach Anspruch 10, ferner mit einer ersten Speichereinrichtung, um die erste und die zweite Verteilung von Werten zu speichern.

12. Vorrichtung nach Anspruch 11, ferner mit Teilungseinrichtungen, zur Berechnung der Verhältnisse der Werte, die von der Meßwelle abgeleitet werden und Werten entsprechen, die aus der ersten Speichereinrichtung ausgelesen werden, und einer zweiten Speichereinrichtung, zum Speichern der durch die Teilungseinrichtung berechneten Verhältnisse.

**Revendications**

1. Appareil d'étude d'un milieu à l'aide d'ondes ultrasoniques, comprenant:

un moyen transducteur d'émission (7) servant à envoyer une onde de mesure utlrasonique dans le milieu;

un moyen transducteur de réception (9) servant à recevoir l'onde de mesure en provenance du milieu; et

un moyen transducteur de pompage (4a, 5) servant à émettre une onde de pompage ultrasonique dans le milieu suivant une direction croisant celle de l'onde de mesure; caractérisé en ce que:

ledit moyen transducteur de pompage comprend plusieurs éléments transducteurs (5) possédant chacun un élément à retard variable respectif (4a) et peut donc avoir pour fonction d'émettre une onde de pompage non plane ou une onde de pompage sensiblement plane dans le milieu.

2. Appareil selon la revendication 1, où le moyen transducteur de pompage (4a, 5) a pour fonction d'émettre une première onde de pompage afin de déterminer une première valeur caractéristique du milieu, et une deuxième onde de pompage afin de déterminer une deuxième valeur caractéristique du champ sonore résultant de la deuxième onde de pompage.

3. Appareil selon la revendication 2, où ladite première onde de pompage est une onde sensiblement plane, et ladite première valeur caractéristique est une valeur du paramètre non linéaire équivalent $(B/A)_e$ caractéristique du milieu.

4. Appareil selon la revendication 2 ou 3, où ladite deuxième onde de pompage est une onde non plane, et ladite deuxième valeur caractéristique est une valeur *k* caractéristique du champ sonore résultant de la deuxième onde de pompage.

5. Appareil selon la revendication 2, 3 ou 4, où ledit moyen transducteur de pompage a pour fonction de focaliser ladite deuxième onde de pompage en un point arbitrairement choisi dans le milieu, par variation des quantités de retard des éléments à retard variable (4a) et, ou bien, déplacement des éléments transducteurs (5).

6. Appareil selon l'une quelconque des revendications précédentes, comprenant en outre un détecteur de phase (12) servant à détecter la variation de phase de l'onde de mesure reçue par le moyen transducteur de réception (9).

7. Appareil selon la revendication 6, comprenant en outre un filtre (14) servant à filtrer la variation de phase de l'onde de mesure détectée par le détecteur de phase (12).

8. Appareil selon la revendication 7, comprenant en outre un dispositif (13) de prise de moyenne de signaux interposé entre le détecteur de phase (12) et le filtre (14).

9. Appareil selon la revendication 3, ou l'une quelconque des revendications 4 à 8 prise en relation avec la revendication 3, ayant pour fonction de produire une première distribution de valeurs, obtenues à partir de l'onde de mesure détectée lors de l'utilisation de la première onde de pompage, de la forme

$$(1/\rho C)(B/A)_e,$$

où $\rho$ représente la densité du milieu, C représente la vitesse des ondes sonores dans le milieu, et $(B/A)_e$ est le paramètre non linéaire équivalent.

10. Appareil selon la revendication 4, ou selon l'une quelconque des revendications 5 à 9 prise en relation avec la relation avec la figure 4, ayant pour fonction de produire une deuxième distribution de valeurs, obtenues à partir de l'onde de mesure détectée lors de l'utilisation de la deuxième onde de pompage, de la forme

$$(1/\rho C)(B/A)_e \cdot \Delta P,$$

où $\rho$ représente la densité du milieu, C représente la vitesse des ondes sonores dans le milieu, et $(B/A)_e$ est le paramètre non linéaire équivalent, et où $\Delta P$ représente une variation de pression due à l'onde de pompage et est indicative de la valeur *k* caractéristique du champ sonore.

11. Appareil selon la revendication 10, comprenant en outre un premier moyen d'emmagasinage qui sert à emmagasiner la première ou la deuxième distribution de valeurs.

12. Appareil selon la revendication 11, comprenant en outre un moyen de division servant à calculer les rapports de valeurs obtenues à partir de l'onde de mesure et de valeurs correspondantes lues dans le premier moyen d'emmagasinage, et un deuxième moyen d'emmagasinage servant à emmagasiner les rapports calculés par le moyen de division.

*Fig. 1*

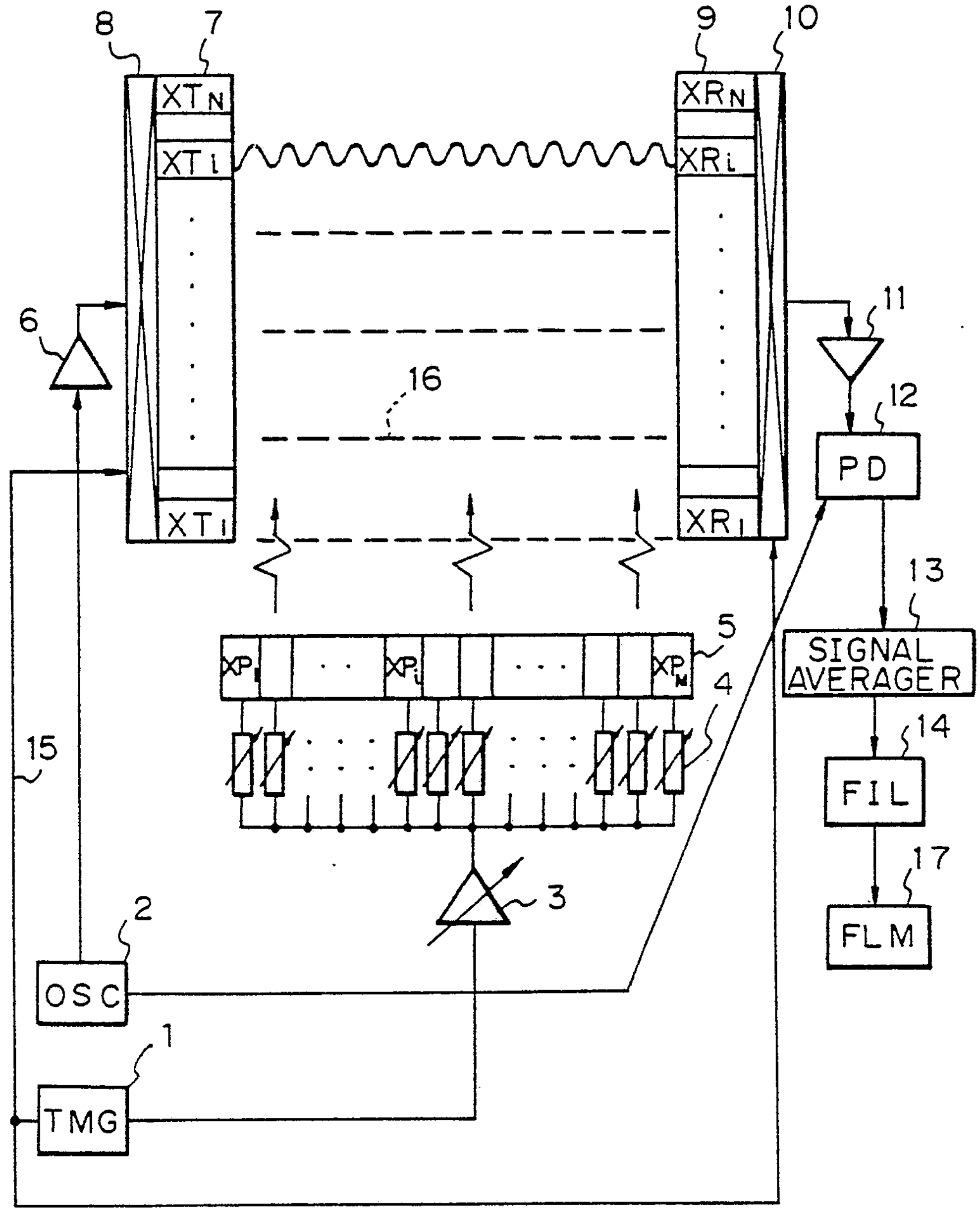
8
7
9
10
XTN
XTi
XT1
XRN
XRi
XR1
6
16
11
12
PD
13
SIGNAL AVERAGER
5
XP1
XPi
XPM
4
14
FIL
15
17
FLM
2
OSC
3
1
TMG

Fig. 2

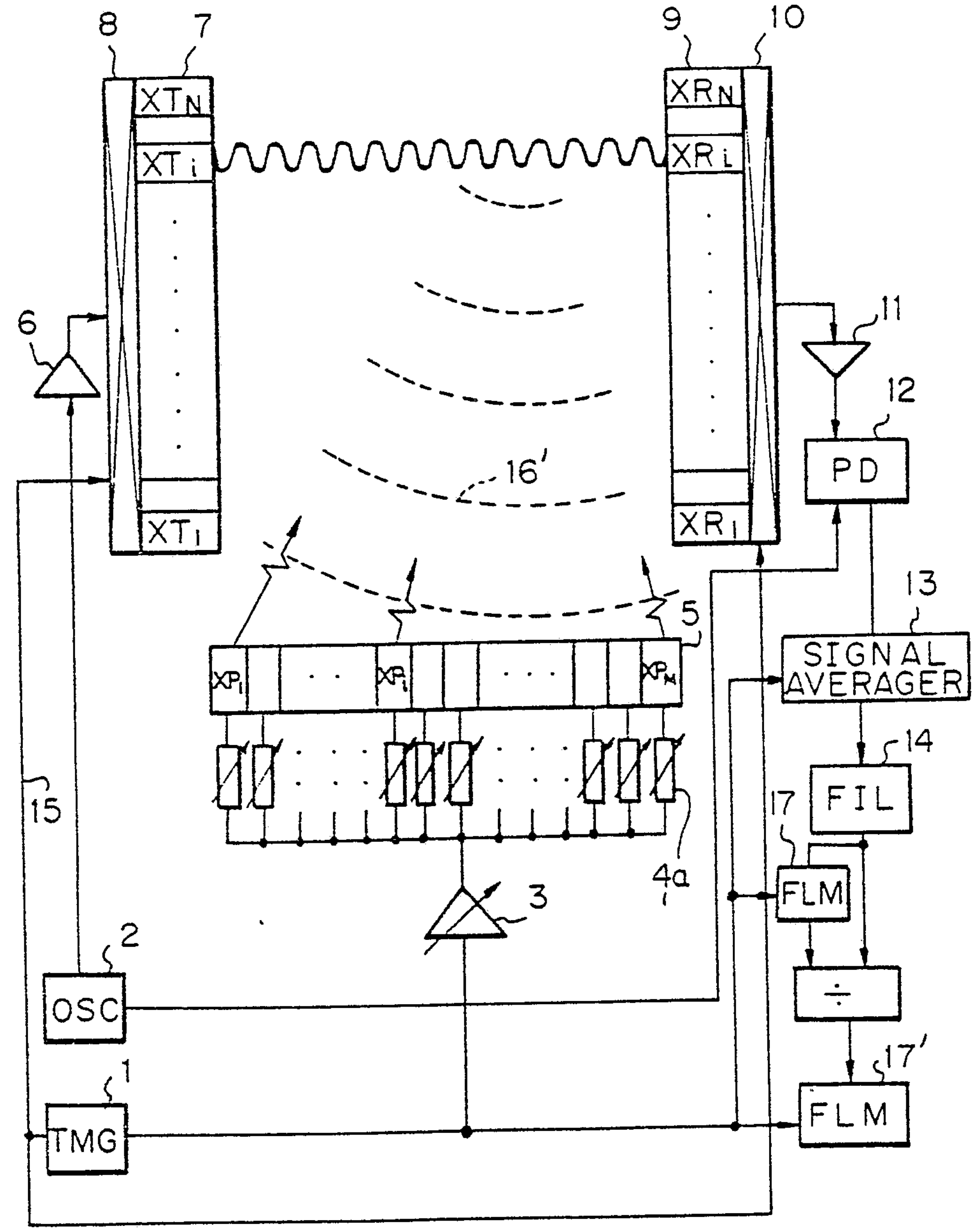
8
7
XTN
XTi
XT1
9
10
XRN
XRi
XR1
6
11
12
PD
16'
13
SIGNAL AVERAGER
5
14
FIL
17
FLM
4a
3
2
OSC
15
17'
FLM
1
TMG

Fig. 3A

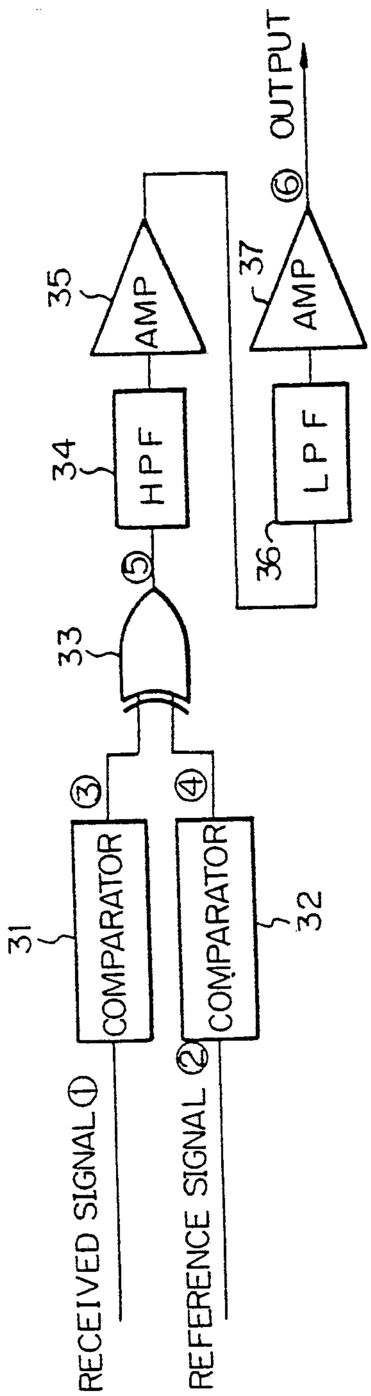
RECEIVED SIGNAL ①
REFERENCE SIGNAL ②
31
COMPARATOR
32
COMPARATOR
③
④
33
⑤
34
HPF
35
AMP
36
LPF
37
AMP
⑥
OUTPUT

Fig. 3B

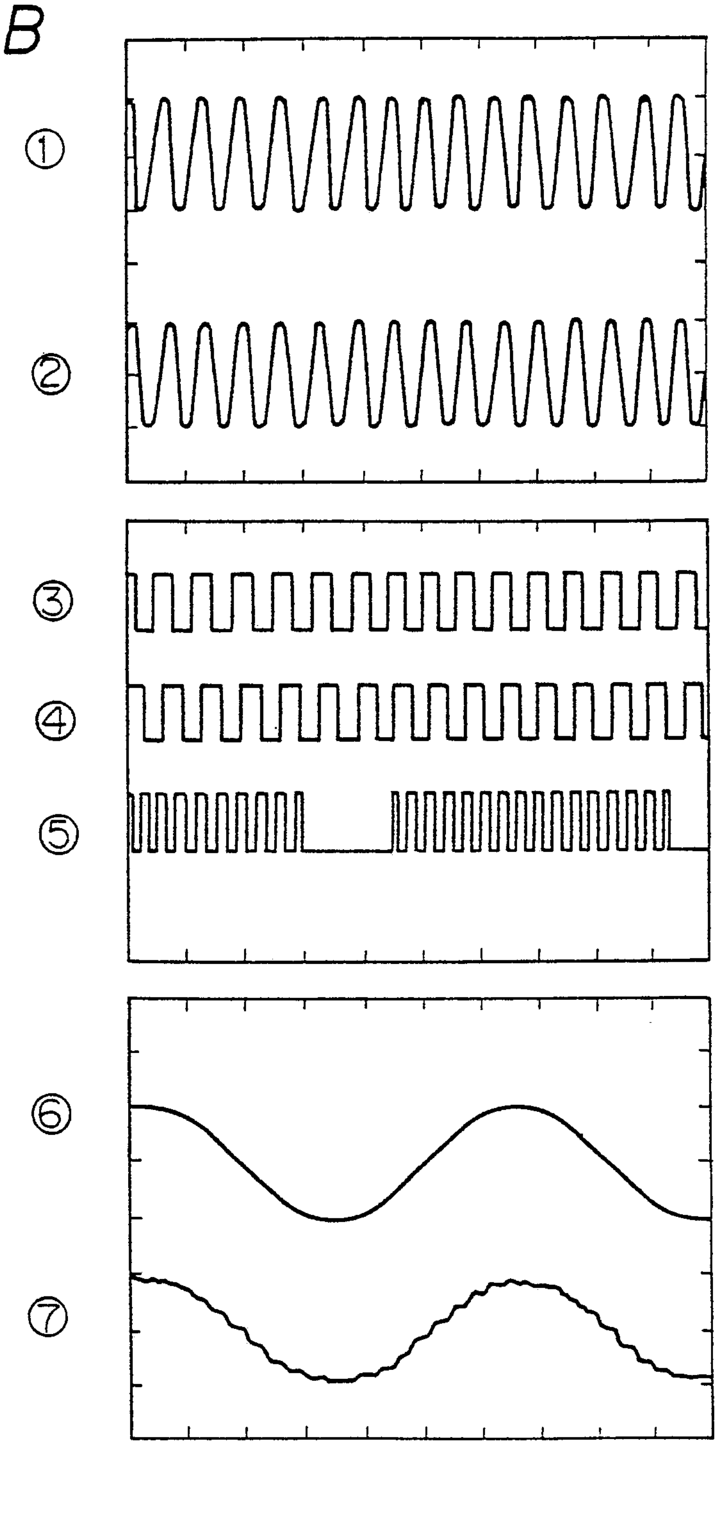

Fig. 4A

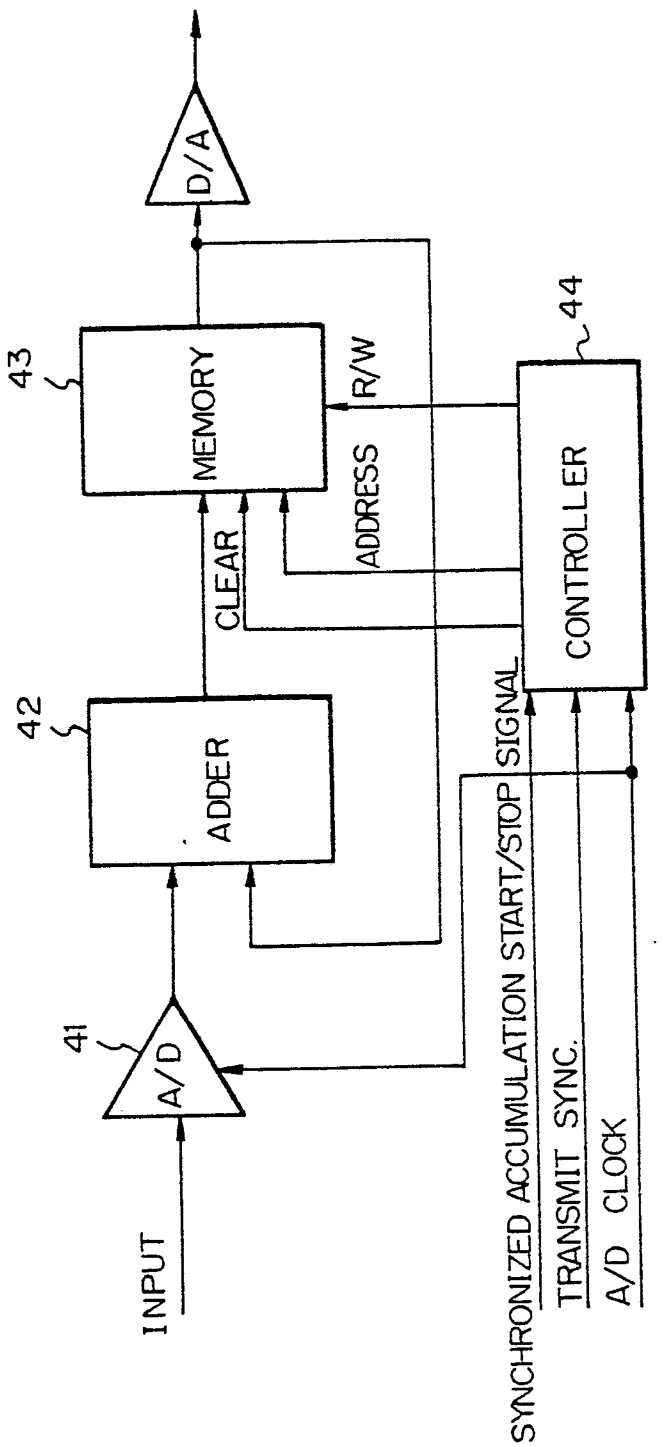
INPUT
A/D
41
ADDER
42
MEMORY
43
D/A
CLEAR
ADDRESS
R/W
CONTROLLER
44
SYNCHRONIZED ACCUMULATION START/STOP SIGNAL
TRANSMIT SYNC.
A/D CLOCK

Fig. 4B

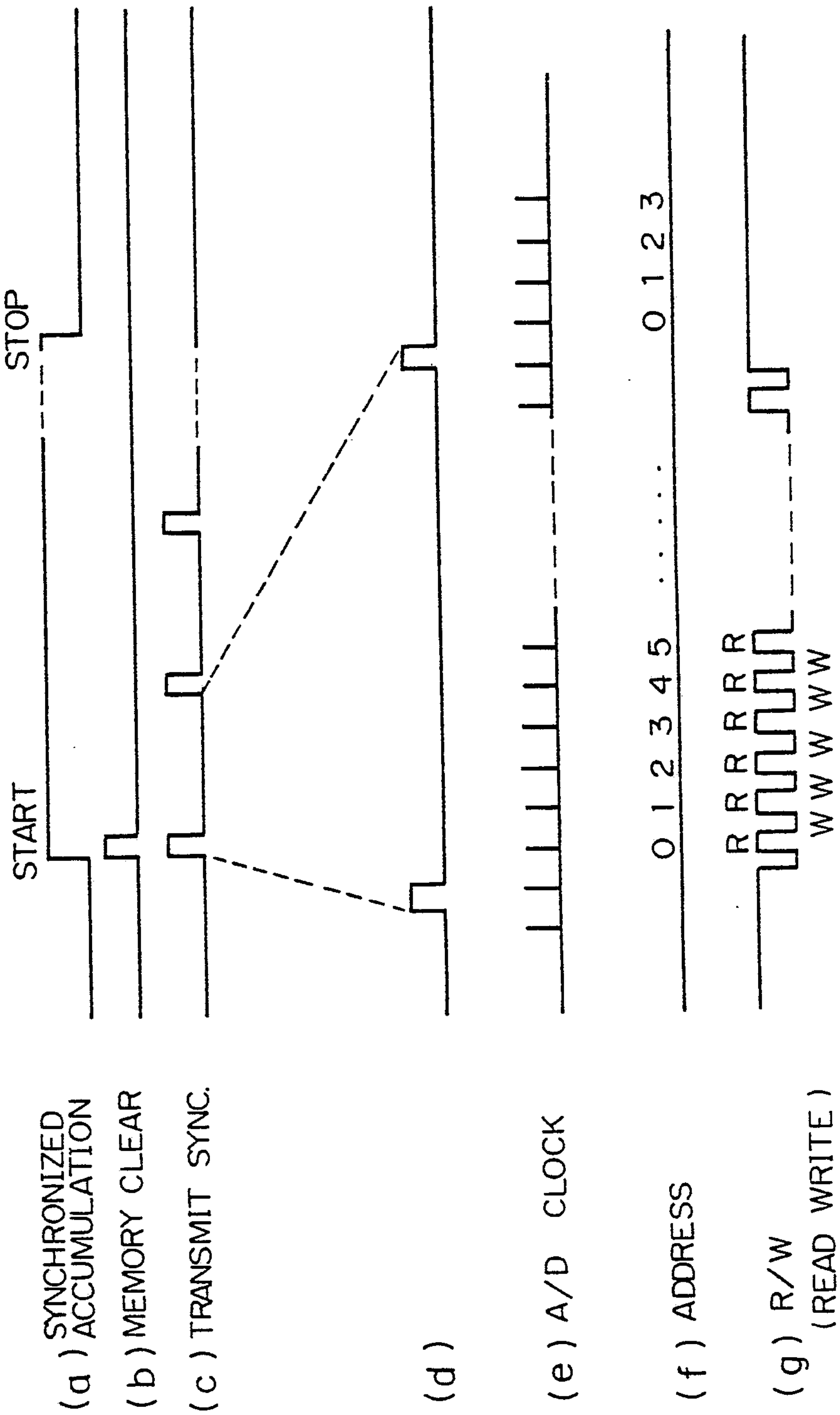
(a) SYNCHRONIZED ACCUMULATION
(b) MEMORY CLEAR
(c) TRANSMIT SYNC.
(d)
(e) A/D CLOCK
(f) ADDRESS
(g) R/W (READ WRITE)
START
STOP
0 1 2 3 4 5 . . . . . 0 1 2 3
R R R R R R
W W W W W

Fig. 5

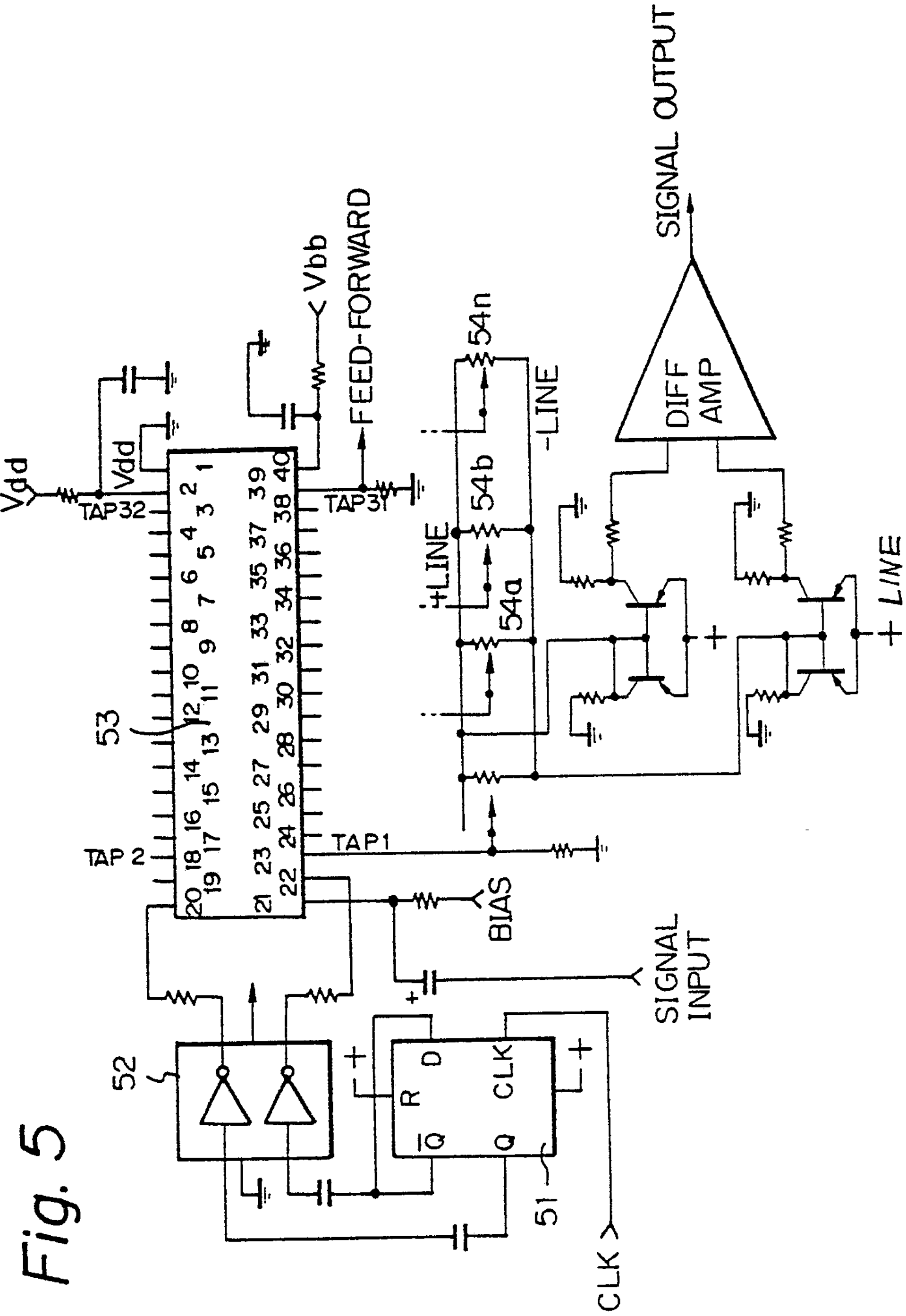
Vdd
TAP32
Vdd
53
TAP 2
TAP1
TAP31
Vbb
FEED-FORWARD
54n
54b
54a
+LINE
-LINE
+ LINE
DIFF AMP
SIGNAL OUTPUT
BIAS
SIGNAL INPUT
52
51
R
D
CLK
Q
CLK

*Fig. 6*

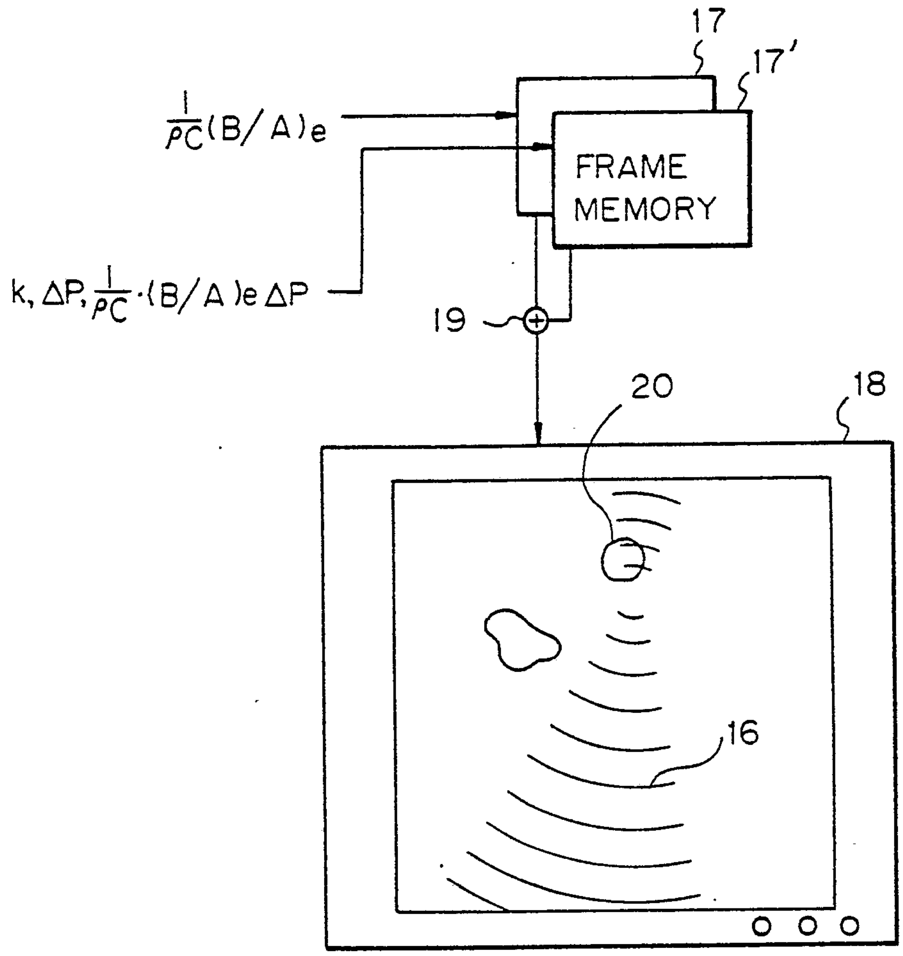

17
17'
$\frac{1}{\rho C}$(B/A)e
FRAME MEMORY
k, ΔP, $\frac{1}{\rho C}$·(B/A)e ΔP
19
20
18
16